# EUROPÄISCHE PATENTSCHRIFT

(11) **EP 1 593 977 B1**
(45) Veröffentlichungstag und Bekanntmachung des Hinweises auf die Patenterteilung: **13.04.2016**
(21) Anmeldenummer: 05009531.4
(22) Anmeldetag: 30.04.2005
(51) Int. Cl.: G01R 11/04, H02B 1/03

(54) **Zählerschrank**
Cabinet for a meter
Armoire pour un compteur

(30) Priorität: 08.05.2004 DE 102004022782
(43) Veröffentlichungstag der Anmeldung: 09.11.2005
(73) Patentinhaber: ABB AG, 68309 Mannheim (DE)
(72) Erfinder: Roth, Michael, 77886 Lauf (DE); Armbruster, Manfred, 77855 Achern (DE)

(56) Entgegenhaltungen:
- DE-A1- 19 542 066
- DE-U1- 9 116 812
- DE-U1- 20 109 873
- DE-U1- 20 206 995

## Beschreibung

Die Erfindung betrifft einen Zählerschrank nach dem Oberbegriff des Anspruches 1.

Ein derartiger Zählerschrank wird in einer elektrischen Installationsverteilung, beispiels-weise in einer Hausinstallationsverteilung eingesetzt und dient im wesentlichen der Aufnahme eines oder mehrerer Stromzähler sowie gegebenenfalls Hauptsicherungen oder Hauptsicherungsselbstschaltern.

Bekannte derartige Zählerschränke werden heute mit Zählerfeldern bestückt, bei denen der untere Anschlussraum, der als Zugangsanschlussraum dient, mit der Zählerträgerplatte, auf der der Zähler befestigt ist, sowie dem oberen Anschlussraum fest verbunden ist.

Die Patentanmeldung DE 195 42 066 A offenbart einen Zählerplatz, der aus Baueinheiten zusammensetzbar ist, die insgesamt die Elemente Schrank, Zählerfeld, unterer Anschlußraum und oberer Anschlußraum umfassen, wobei der Schrank eine Baueinheit darstellt und wobei die Zählerfelder und ihre oberen Anschlußräume jeweils eine Baueinheit darstellen und die unteren Anschlußräume zusammen eine Baueinheit darstellen.

Das Gebrauchsmuster DE 91 16 812 U offenbart einen Baugruppenträger zum Einbau in einen Schaltschrank mit Hutschienen, wobei mindestens ein auf der Rückseite einer Montageplatte angebrachtes Hakenelement zum Einhaken in eine der Hutschienen und mindestens eine Arretiereinrichtung zum lösbaren Arretieren der Montageplatte im Schaltschrank vorhanden sind.

Die Fertigung derartiger Zählerschränke ist aufwendig.

Aufgabe der Erfindung ist es, einen Zählerschrank der eingangs genannten Art zu schaffen, bei dem die Montage erheblich vereinfacht ist.

Diese Aufgabe wird erfindungsgemäß gelöst durch die Merkmale des Anspruches 1.

Erfindungsgemäß ist der modular ausgebildete, das Zugangsmodul bildende Zugangsabschnitt mit Trägerschienen ausgebildet, auf denen quer dazu verlaufende Sammelschienen befestigt sind, wobei auf die Sammelschienen die Sicherungen oder die Hauptsicherungsautomaten und dergleichen aufsetzbar sind; das Zugangsmodul ist dann mittels der Trägerschienen im unteren Bereich des Zählerschrankes einsetzbar. Der besondere Vorteil dieser Anordnung besteht darin, dass die Trägerschienen, die Sammelschienen sowie gegebenenfalls die darauf befestigten Sicherungsautomaten oder Hauptsicherungen vorgefertigt werden können, so dass bei der Endmontage lediglich das Zugangsmodul in den Zählerschrank eingesetzt zu werden braucht.

Gemäß der Erfindung sind an einem Ende der Trägerschienen hakenartige Fortsätze angeformt, mit denen das Zugangsmodul an einer im Schaltschrank befestigten, horizontal verlaufenden Halteschiene eingehängt ist.

Damit wird auch der Einbau erheblich vereinfacht.

Genau wie das Zugangsmodul kann auch der Zählerplatz zusammen mit dem Aufnahmeraum für Zählerzusatz-, Tarif- und Steuergeräte eine modulare Einheit bilden; diese Anordnung ist in der gleichzeitig und parallel eingereichten Patentanmeldung DE 102 004 022 783 A (Mp.-Nr. 04/557) beschrieben.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung und weitere Vorteile näher erläutert und beschrieben werden.

Es zeigen:
- Fig. 1: eine perspektivische Einsicht in einen Schaltschrank mit montierten Zugangsmodul,
- Fig. 2: eine Einsicht in den Zählerschrank, in der der Montageschritt vor der endgültigen Befestigung gezeigt ist,
- Fig. 3 und 4: zwei unterschiedliche Anordnungen von Trägerschienen, mit Sammelschienen und
- Fig. 5: eine Einsicht in einen komplett bestückten Zählerschrank.

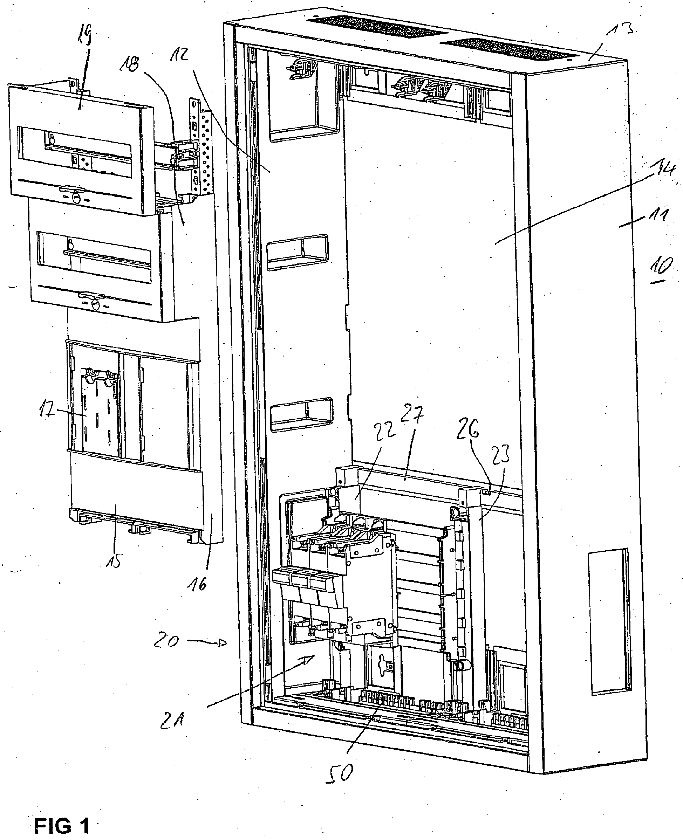

Es sei nun Bezug genommen auf die Fig. 1.

Der Zählerschrank, der in seiner Gesamtheit mit der Bezugsziffer 10 bezeichnet ist, besitzt zwei sich gegenüberliegende Seitenwände 11 und 12 sowie eine Bodenwand (nicht mit Bezugsziffern versehen, da abgedeckt), eine Deckwand 13 sowie eine Rückwand 14. Der Zählerschrank ist weiterhin nach vorne, also zum Betrachter hin, mittels einer hier nicht dargestellten Tür verschließbar, die in beispielsweise an der freien Längskante der Seitenwand 12 angeordneten Gelenken gelenkig und schwenkbar aufgehängt ist.

Ins Innere des Zähler schrankes wird ein erstes Modul 15 eingesetzt, welches ein erstes Gehäuseelement 16 aufweist, dass einen Zählerplatzabschnitt 17 sowie einen Gehäuseabschnitt zur Aufnahme von Zählerzusatz-, Tarif- und Steuergeräten mit der Bezugsziffer 18 bezeichnet, umfasst. Dieses Modul ist in der parallel eingereichten Patentanmeldung DE 102004 022 783 A (Mp.-Nr. 04/557) beschrieben, so dass an dieser Stelle hierauf nicht eingegangen zu werden braucht. Oberhalb des Gehäuseabschnittes 18 für die Zählerzusatz-, Tarif- und Steuergeräte befindet sich ein Gehäuse 19 für Abgangsleitungen; die gesamte Einheit ist ebenfalls in der DE 102004 022 783 A (Mp.-Nr. 04/557) beschrieben, so dass auch hier nicht näher darauf einzugehen ist.

Unterhalb des Zählerplatzabschnittes befindet sich ein Zugangsraum 20, in dem eine vorgefertigte, modulare Einheit 21 eingesetzt, die zwei im Schaltschrank 10 vertikal verlaufende Trägerschienen 22 und 23 aufweist, an deren oberem Ende Haken 24 und 25 angeformt sind, die hinter entsprechende Ausnehmungen 26 an einer horizontal verläufenden Halteschiene 27 angeordnet und eingebracht sind. Die beiden Trägerschienen 22 und 23 haltern Sammelschienen 28, 29, 30, 31 und 32, welche Sammelschienen jeweils in Aussparungen 40 (hier ist nur eine Aussparung mit der Bezugsziffer 40 bezeichnet) eingelegt und darin mittels einer über Dome 42 und 43 an jeder Trägerschiene 22, 23 geführten Abdeckleiste 41 befestigt sind.

Auf den Sammelschienen 28 bis 32 sind Hauptsicherungsautomaten oder Hauptsicherungsschalter befestigt, die auch in elektrisch leitender Verbindung mit wenigstens den Sammelschienen 29 bis 31 stehen.

Dieses Modul, welches sich zusammensetzt aus den Trägerschienen 22, 23, den Sammelschienen 28 bis 32 sowie den Halteleisten 41 und gegebenenfalls den Schaltgeräten 44 wird fabrikseitig vor der Endmontage des Schalters hergestellt und ist auch getrennt von dem Zählerschrank 10 handhabbar.

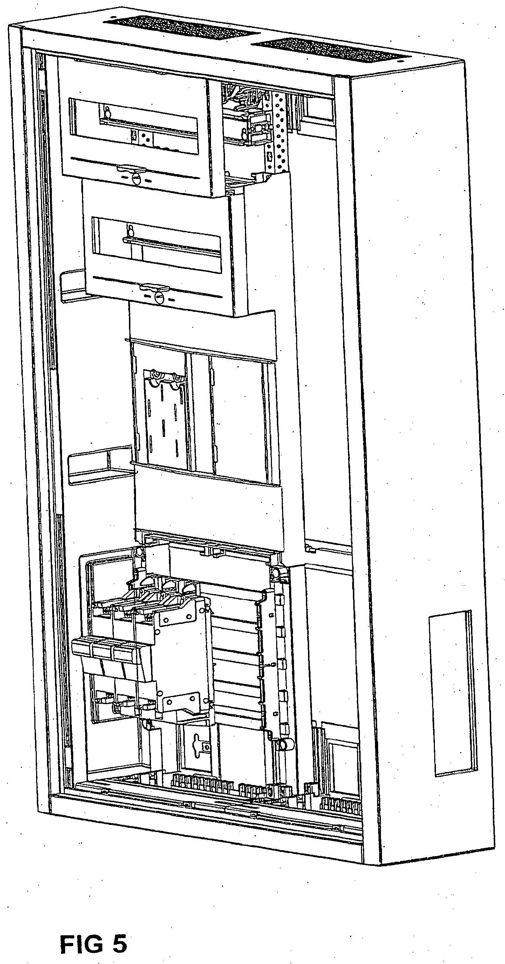

Zur Montage wird diese modulare Einheit in Pfeilrichtung P nach unten abgesenkt, wobei die unteren Enden der Trägerschienen 22, 23 über an der Bodenwand des Zählerschrankes 10 angeordnete Haltedome 45, 46 gesteckt und mit den Haken 24, 25 in die Rücksprünge 26 eingehängt werden. Die Fig. 1 zeigt den endgültig montierten Zustand. Danach kann die Einheit 15 bis 19 in den Zählerschrank 10 eingebaut werden, so dass der Zählerchrank fertig bestückt ist, wie in Fig. 5 dargestellt.

Die Ausführungsformen gemäß den Figuren 1, 2 und 5 zeigen eine Zählerbestückung des Zählerschrankes mit einer Einfeld-Breite. Da ein Zählerschrank auch eine zwei oder Mehrfeld-Breite aufweisen kann, können auch mehrere Module in den Zählerschrank eingesetzt werden. Bei der Ausführung gemäß den Figuren 1, 2 und 5, die einen Zählerschrank in 2-Felder-Breite zeigen, ist rechts (in der Zeichnung) neben den Zählerschrankeinbauten noch Platz vorhanden, in den die gleichen Komponenten nochmals eingebaut werden können.

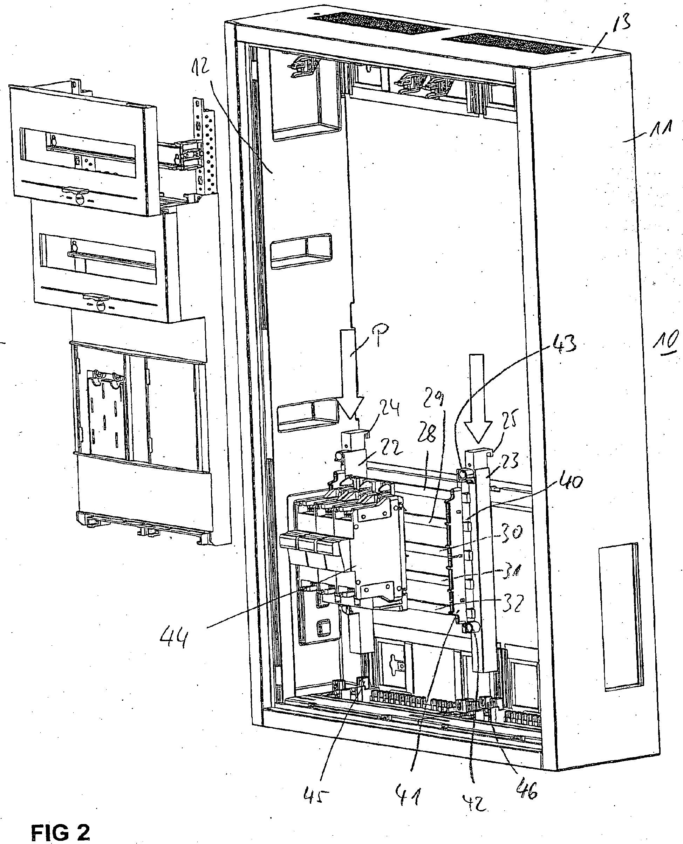

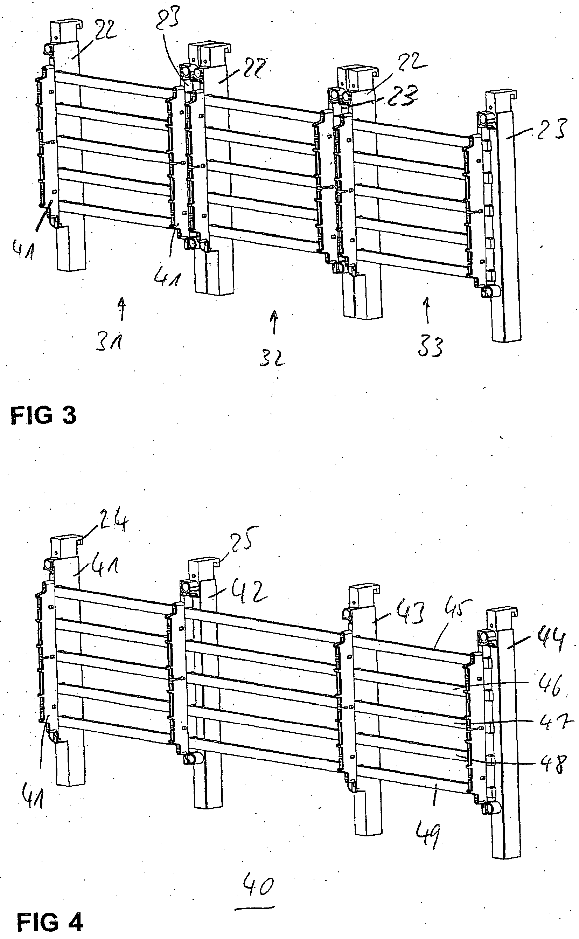

Die Fig. 3 zeigt eine Anordnung aus dem Modul 21 gleichenden, drei nebeneinander liegenden Modulen, welche Module hier die Bezugsziffer 31, 32 und 33 erhalten haben. Jedes Modul besteht so wie das im Zählerschrank gemäß Fig. 10 eingebaute Modul aus den beiden. Trägerschienen 22, 23, in denen die Sammelschienen 28 bis 32 mittels der Abdeck- oder Halteleisten 41 gehaltert sind; die Schaltgeräte 44 der Fig. 2 sind hier nicht eingezeichnet.

Bei der Ausführung gemäß Fig. 4 ist ein Modul 40 dargestellt, welches in einen Zählerschrank mit vier Feldern eingesetzt werden kann. Dazu sind vier Trägerschienen 41, 42, 43 und 44 vorgesehen, die durchgehende Sammelschienen 45, 46, 47 48, 49 mittels der Halteleisten 41 fixieren; das Modul 40 kann dann durch die Schaltgeräte 44 zu einem Gesamtmodul ergänzt werden. Die Montage erfolgt auch hier wieder dadurch, dass die Haken 25, die die gleichen Bezugsziffern aufweisen wie die Haken gemäß Fig. 2, in eine geeignete Halteschiene 27 eingehängt.

Unterhalb dieses Moduls befinden sich Anschlussklemmen 50, an denen Zugangsleitungen angeschlossen werden können.

Der Zählerabschnitt zeigt einen Zählerplatz 17, in den ein elektronischer Haushaltszähler eingesetzt ist. Zu diesem elektronischen Haushaltszähler gehört auch der Gehäuseabschnitt 18, in dem sich Zählerzusatz-, Tarif- und Steuergeräte befinden. Die modulare Anordnung mit den Trägerschienen, den Sammelschienen und den Hauptleitungsschutzschaltern kann natürlich auch in einem Zählerschrank angewendet werden, in der ein herkömmliches Zählerkreuz vorgesehen ist, auf dem ein herkömmlicher Zähler aufgesetzt ist. Er kann natürlich auch dort verwendet werden, wo auf das Zählerkreuz ein Adapter aufgesetzt wird, welcher Adapter dann den elektronischen Haushaltszähler aufnimmt.

## Patentansprüche

1. Zählerschrank mit einem Zählerplatzabschnitt (17), mit einem darüber befindlichen Abgangsabschnitt und mit einem darunter befindlichen Zugangsabschnitt, wobei wenigstens ein modular ausgebildetes Zugangsmodul (21; 31, 32, 33; 40) im Zugangsasschmitt vorgesehen ist, welches Zugangsmodul (21; 31, 32, 33; 40) Trägerschienen (22, 23; 41, 42, 43, 44), an denen quer dazu verlaufende Sammelschienen (28, 29, 30, 31, 32; 45, 46, 47, 48, 49) befestigt sind, aufweist, wobei auf die Sammelschienen (28, 29, 30, 31, 32; 45, 46, 47, 48, 49) Sicherungen sowie Hauptsicherungsautomaten aufsetzbar sind, und das Zugangsmodul (21; 31, 32, 33; 40) mittels der Trägerschienen (22, 23; 41, 42, 43, 44) im unteren Bereich des Zählerschrankes (10) im Zugansaschmitt einsetzbar ist, und wobei der Zählerschrank zwei gegenüberliegende Seitenwände (11, 12) sowei eine Bodenwand, eine Deckenwand (13) sowie eine Rückwand (14) aufweist, **dadurch gekennzeichnet, dass** an dem im montierten Zustand oberen Ende der Trägerschienem Haken (24, 25) angeformt sind, mit denen das Zugangsmodul (21; 31, 32, 33; 40) an einer im Zählerschrank (10) befestigten horizontal verlaufenden Halteschiene (27) eingehängt ist und dass die unteren Enden der Trägerschienen (22, 23; 41, 42, 43, 44) über an der Bodenwand im Zählerschrank angeordnete Fixierungsdome steckbar und nach Fixierung dort gehalten sind.

2. Zählerschrank nach Anspuch 1, **dadurch gekennzeichnet, dass** das Zugangsmodul (21) eine Feldbreite aufweist und mit weiteren Zugangsmodulen (31, 32, 33) mit je einer Feldbreite zu einem Zählerschrank in Mehrfeldbreite ergänzbar ist.

3. Zählerschrank nach einem der vorherigen Ansprüche, **dadurch gekennzeichnet, dass** das Zugangsmodul (40) wenigstens drei Trägerschienen (41, 42, 43, 44) aufweist, an denen durchgehende Stromschienen (45, 46, 47, 48, 49) fixiert sind.

## Claims

1. Meter cabinet having a meter station section (17), having an output section which is situated above said meter station section, and having an access section which is located below said meter station section, wherein at least one modular access module (21; 31, 32, 33; 40) is provided in the access section, which access module (21; 31, 32, 33; 40) has carrier rails (22, 23; 41, 42, 43, 44) to which busbars (28, 29, 30, 31, 32; 45, 46, 47, 48, 49) which run transversely to said carrier rails are fastened, wherein fuses and main automatic circuit breakers can be mounted onto the busbars (28, 29, 30, 31, 32; 45, 46, 47, 48, 49), and the access module (21; 31, 32, 33; 40) can be inserted by means of the carrier rails (22, 23; 41, 42, 43, 44) into the access section in the lower region of the meter cabinet (10), and wherein the meter cabinet has two opposite side walls (11, 12) and a bottom wall, a top wall (13) and a rear wall (14), **characterized in that** hooks (24, 25) are integrally formed on the end of the carrier rails which is at the top in the mounted state, the said hooks being used to suspend the access module (21; 31, 32, 33; 40) from a holding rail (27) which is fastened in the meter cabinet (10) and runs horizontally, and **in that** the lower ends of the carrier rails (22, 23; 41, 42, 43, 44) can be plug-connected by means of fixing domes which are arranged on the bottom wall in the meter cabinet and are held there after fixing.

2. Meter cabinet according to Claim 1, **characterized in that** the access module (21) has a panel width and can be supplemented with further access modules (31, 32, 33), which each have a panel width, to form a meter cabinet of multiple panel width.

3. Meter cabinet according to either of the preceding claims, **characterized in that** the access module (40) has at least three carrier rails (41, 42, 43, 44) to which continuous busbars (45, 46, 47, 48, 49) are fixed.

## Revendications

1. Armoire de compteur comportant une section de positionnement de compteur (17), ayant une section de sortie se trouvant au-dessus de celle-ci et une section d'entrée se trouvant en dessous de celle-ci, dans laquelle au moins un module d'entrée réalisé de manière modulaire (21 ; 31, 32, 33 ; 40) est prévu dans la section d'entrée, lequel module d'entrée (21 ; 31, 32, 33 ; 40) comprend des rails de support (22, 23 ; 41, 42, 43, 44) auxquels sont fixées des barres omnibus (28, 29, 30, 31, 32 ; 45, 46, 47, 48, 49) s'étendant transversalement à ceux-ci, dans lequel des fusibles, ainsi que des fusibles automatiques principaux, peuvent être placés sur les barres omnibus (28, 29, 30, 31, 32 ; 45, 46, 47, 48, 49), et le module d'entrée (21 ; 31, 32, 33 ; 40) peut être introduit au moyen des rails de support (22, 23 ; 41, 42, 43, 44) dans la zone inférieure de l'armoire de compteur (10) dans la section d'entrée, et dans laquelle l'armoire de compteur comprend deux parois latérales (11, 12) ainsi qu'une paroi de fond, une paroi de capot (13) et une paroi arrière (14), **caractérisée en ce que**, à l'extrémité supérieure des rails de support, à l'état monté, sont formés des crochets (24, 25) au moyen desquels le module d'entrée (21 ; 31, 32, 33 ; 40) est accroché à un rail de retenue (27) s'étendant horizontalement et fixé dans l'armoire de compteur (10) et **en ce que** les extrémités inférieures des rails de support (22, 23 ; 41, 42, 43, 44) peuvent être enfichées sur un dôme de fixation disposé sur la paroi de fond dans l'armoire de compteur et y sont maintenus après la fixation.

2. Armoire de compteur selon la revendication 1, **caractérisée en ce que** le module d'entrée (21) présente une largeur de baie et peut être complété par d'autres modules d'entrée (31, 32, 33) ayant chacun une largeur de baie pour obtenir une armoire de compteur ayant plusieurs largeurs de baies.

3. Armoire de compteur selon l'une quelconque des revendications précédentes, **caractérisée en ce que** le module d'entrée (40) comprend au moins trois rails de support (41, 42, 43, 44) sur lesquels sont fixés des rails d'alimentation traversants (45, 46, 47, 48, 49).
